# EUROPEAN PATENT SPECIFICATION

(11) **EP 0 713 746 B1**
(45) Date of publication and mention of the grant of the patent: **07.01.1998**
(21) Application number: 95830440.4
(22) Date of filing: 18.10.1995
(51) Int. Cl.: B23K 33/00, B23K 26/00

(54) **Apparatus and method for butt-welding of planar metal sheets of different thickness, by means of a laser beam**
Vorrichtung und Verfahren zum Stumpfschweissen von flachen Blechen verschiedener Dicken mittels eines Laserstrahles
Appareil et procédé de soudage bout-à-bout de tôles planes, au moyen d'un faisceau laser

(30) Priority: 22.11.1994 IT TO940932
(43) Date of publication of application: 29.05.1996
(73) Proprietor: STOLA S.p.A., 10090 Cascine Vica - Rivoli (Torino) (IT)
(72) Inventor: Caprioglio, Luigi, I-10098 Rivoli (Torino) (IT)
(74) Representative: Notaro, Giancarlo

(56) References cited:
- EP-A- 0 326 994
- EP-A- 0 565 846
- PATENT ABSTRACTS OF JAPAN vol. 6 no. 58 (M-122) ,15 April 1982 & JP-A-57 001571 (TOPY IND LTD) 6 January 1982,

## Description

The present invention relates to the field of the apparatus for butt-welding of planar metal sheets of different thickness, by means of a laser beam.

Recently the use has been more and more spread, particularly in the automotive industry, of structures obtained from planar elements of sheet metal having different thickness, which are butt welded by means of a laser beam, so as to form a planar blank ("tailored blank") which is then subject to a pressing operation in order to obtain the required configuration. The thickness of the above mentioned elements is chosen as a function of the loads to which the various parts of the final structure thus obtained are subject in use. This technology has a number of advantages with respect to the conventional solution which provides for welding of the various sheet metal elements after that the latter have been pressed so as to give them the requested configurations. The use of the laser beam ensures the good quality of welding and avoids that along the welding line surfaces are originated which project from the planes of the metal sheets, which could give rise to drawbacks in the following operations to which the welded structure is subjected. Welding assembling methods of the above described type are disclosed for example in Japanese Utility Model JP-A-59-182424 and in European Patent EP-B-0 279 866. EP-A-565 846 disloses an apparatus and a method for butt-welding planar metal sheets of different thickness as set forth in the pre-characterizing portion of Claims 1 and 3.

During the welding process, the metal sheets with different thickness are held in contact for butt-welding, with their surfaces facing towards the head for focusing the laser beam lying in the same plane, and the opposite surfaces forming a step therebetween. The planar blank thus obtained ("tailored blank") is then subjected to a pressing or drawing operation that provides the final requested configuration. However, the existence of the above mentioned step on one of the two faces of the structure may give rise to some drawbacks, such as the impossibility of welding, on said stepped side, reinforcing plates which extend on both sides of the junction line of the sheet metal elements forming the structure, since these plates cannot rest on a continuous supporting surface. Another application where said step may give drawbacks is that of a motor vehicle back door, where it is necessary to provide a continuous planar surface which is to cooperate with a weather strip arranged on the vehicle body to ensure sealing.

The object of the present invention is that of providing an apparatus of the type indicated at the beginning which is able to overcome said drawbacks.

In order to achieve this object, the invention provides an apparatus as defined in Claim 1.

The invention also provides a welding process carried out by means of the above described apparatus.

The invention will be now described with reference to the annexed drawings, given purely by way of non limiting example, in which:
figure 1 is a cross-sectional diagrammatic view which shows a preferred embodiment of the apparatus according to the invention,
figure 2 is a partial perspective view of the welded structure obtained by means of the apparatus according to the invention,
figure 3 shows a structure obtained from sheet metal elements welded by the apparatus according to the invention,
figure 4 is a view along arrow IV of figure 3, at an enlarged scale, and
figures 5, 6 show a perspective view and a plan view of another application of the invention.

With reference to the drawings, reference numeral 1 generally designates a head for focusing a laser beam. The focusing head 1 can be made in any known way and does not fall, taken alone, within the scope of the present invention. The same applies to the structure supporting the focusing head, which includes mirror means for conveying a laser beam coming from a laser generator of any known type (not shown) into the focusing head. The details of construction relative to these parts, which are known per se, have not been shown herein, also to render the drawings more easy and simple to understand.

The apparatus according to the invention further comprises a supporting structure 2, which also can be made in any known way, on which two planar metal sheets 3, 4 having different thickness are supported. Metal sheet 4 rests on the supporting structure 2 with the interposition of an element 5 which is so shaped as to keep surfaces 3a, 4a of metal sheets 3, 4 which face towards the focusing head 1 in the same plane, even if metal sheets 3, 4 have a different thickness. Once the metal sheets 3, 4 have been positioned on the supporting structure 2, they are pressed thereagainst by two sheet-holding plates 6. Pushing means are associated with the sheet-holding plates 6 which push these plates against metal sheets 3, 4. Such means can be made in any known way (for example by hydraulic jacks), as it will be clearly apparent to the men skilled in the art. Therefore, also in this case, such details have been eliminated from the drawings, for sake of clarity.

With the laser focusing head 1 and the supporting structure 2 there is associated a displacing means which is able to move the laser focusing head 1 relative to the supporting structure 2, so as to move the laser beam throughout the whole length of the contact line 7 between the two metal sheets 3, 4, to carry out the welding operation. For example, this result may be obtained by providing the laser focusing head 1 on a fixed supporting structure and by mounting the supporting structure 2, with the associated sheet-holding plates 6, on a slide movable along a horizontal direction with respect to the structure supporting the laser focusing head 1. Again, the details of construction relating to this arrangement have been eliminated for sake of clarity, since they are clearly apparent to the skilled technicians.

According to the known technology which has been described, the two metal sheets 3, 4 are welded to each other by means of a laser beam in their planar configuration, whereupon they are subjected to a pressing or drawing operation to provide the requested structure.

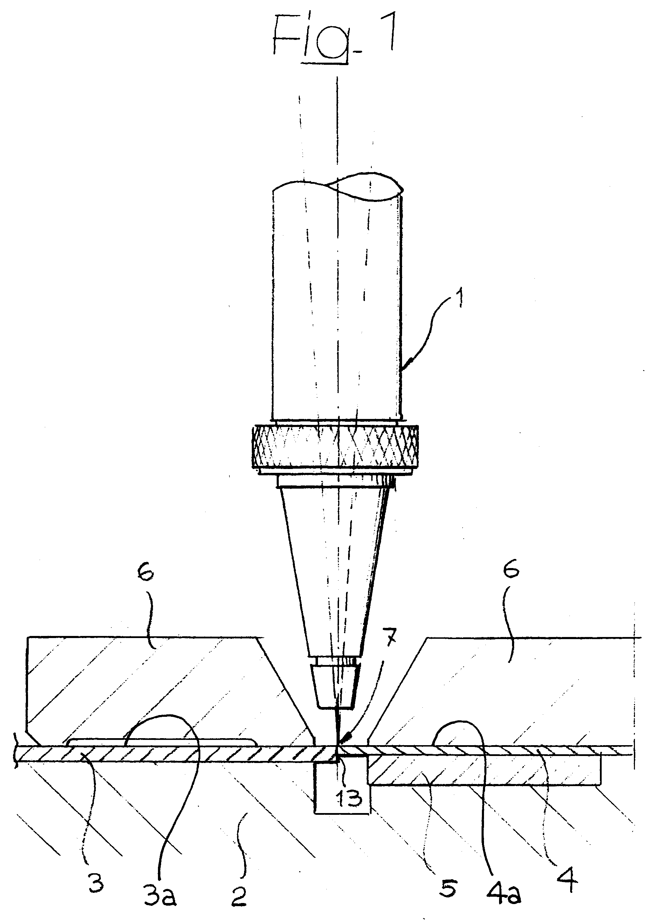

Figure 3 of the annexed drawings shows in an exploded view an upright 8 which is formed by two structures 9 of welded and pressed sheet metal, having flanges 10 which are to be welded to each other (shown spaced apart from each other in figure 3). Each structure 9 is formed from two initially planar sheet metal elements 3, 4 which are welded in the above described way (figure 1) and then subjected to a pressing operation. As indicated already, the two elements 3, 4 are welded to each other by holding such elements in the same plane at their surfaces facing towards the laser focusing head 1 during the welding operation. This surfaces are those corresponding to the surfaces of flanges 10 which are facing to each other in figure 3. Therefore, these flanges may be welded to each other, since each of them has a continuous planar surface. Each structure 9 however has a step 13 on its opposite side, since sheet metal element 3 has a thickness which is greater than that of sheet metal element 4. This would prevent a reinforcing plate 14 which extends on both sides of the junction line 7 of the two elements 3, 4 to be welded on this side of structure 9.

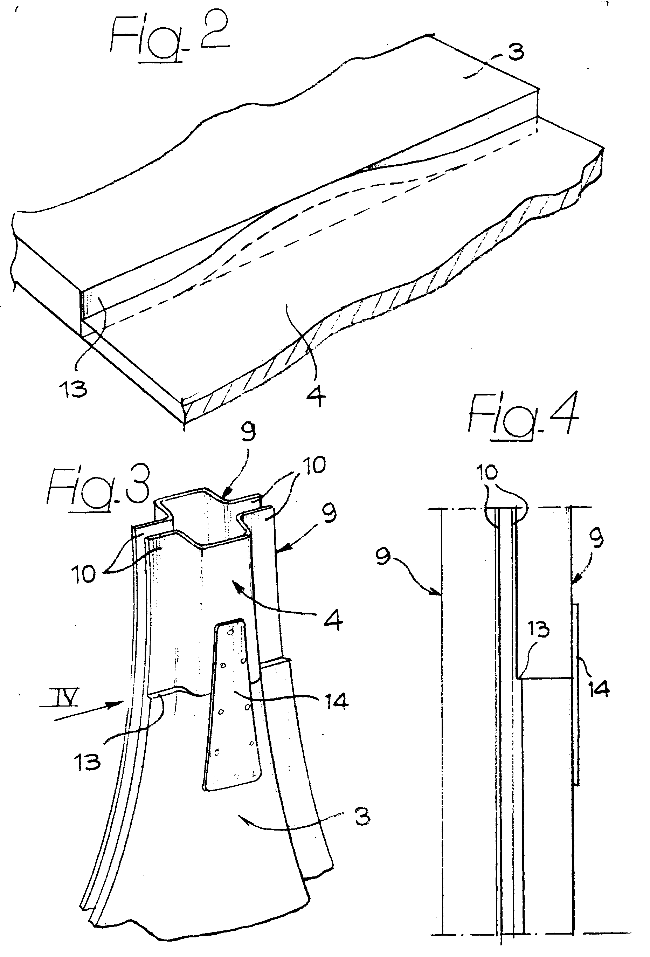

To overcome this drawback, element 5 shown in figure 1, and sheet-holding plate 6 associated therewith, are so shaped as to plastically deform the metal sheet 4 out of its plane in its central portion, as shown at an enlarged scale in figure 2. As shown, the deformation which is obtained renders the two metal sheets coplanar at their faces opposite to those facing towards the laser focusing head, so as to nullify said step 13 at said central portion, while forming a new step on the opposite side (see also figures 3, 4). In other words, the lowering operation of the sheet-holding plates which is carried out immediately before the beginning of the welding operation also causes a plastic deformation of the metal sheet 4 according to the configuration shown in figure 2, so as to provide at the central portion of structure 9 a continuous planar surface on which the reinforcing plate 14 can be welded.

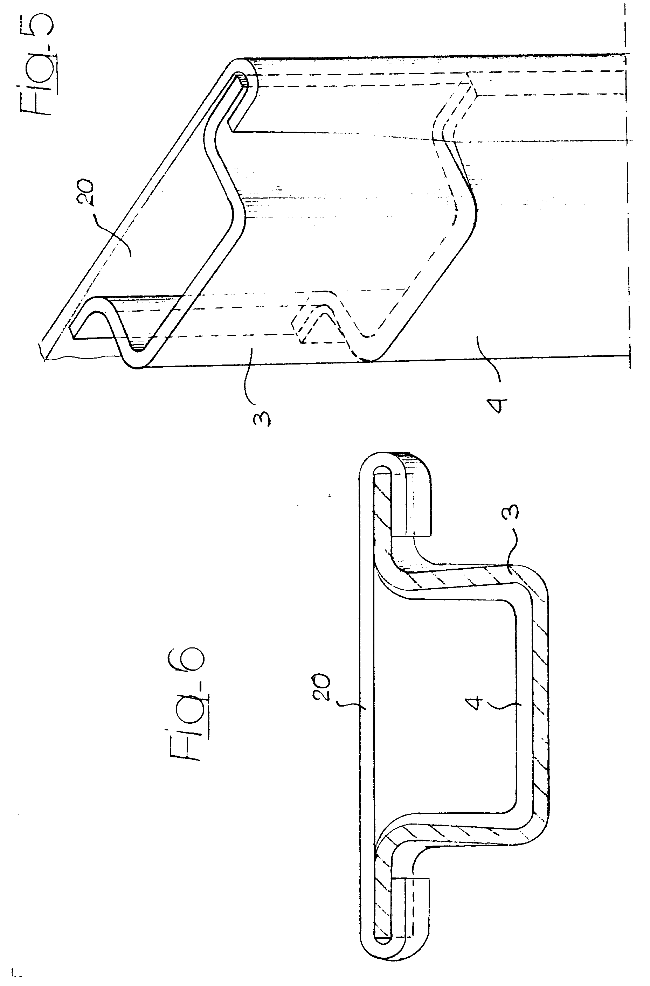

Figures 5, 6 show the application of the invention to a portion of a motor vehicle back door. Due to the invention, the two elements 3, 4 have at their central portion a continuous planar surface, which is to cooperate with a weather strip fixed to the motor vehicle body along the edge of the rear opening of the vehicle back door. On the sides of elements 3, 4, the continuous planar surface is on the opposite side, to enable a counter-plate 20 to be welded thereto.

Naturally, while the principle of the invention remains the same, the details of construction and the embodiments may widely vary with respect to what has been described and illustrated purely by way of example, without departing from the scope of the present invention.

## Claims

1. Apparatus for butt-welding of planar metal sheets (3, 4) having a different thickness, by means of a laser beam, comprising :
- a head (1) for focusing a laser beam,
- a structure (2) supporting the metal sheets to be welded (3, 4), on which metal sheets having a different thickness (3, 4) are positioned for butt-welding, with their surfaces (3a, 4a) facing towards the laser focusing head (1) lying in the same plane and their opposite surfaces forming a step,
- two sheet-holding plates (6), for urging the metal sheets (3, 4) to be welded against said supporting structure (2),
- means for moving the laser focusing head (1) relative to said structure (2) supporting the metal sheets (3, 4) to be welded, so as to move the laser beam along the contact line (7) of the metal sheets for welding the latter to each other,
- said supporting structure (2) and at least one of said sheet-holding plates (6) being shaped so as to plastically deform the metal sheet (4) interposed therebetween when said sheet-holding plate (6) is urged against said metal sheet (4) before the welding operation is carried out,
characterized in that said supporting structure (2) and said sheet-holding plate (6) are so shaped as to move a portion of this metal sheet to be coplanar with the other metal sheet on the side opposite to that facing towards the laser focusing head (1), so as to nullify said step (13) at said portion, while forming a step on the opposite side of the metal sheets.

2. Apparatus according to claim 1, characterized in that said supporting structure (2) is provided, at its portion which is for receiving the metal sheet (4) to be deformed, with an auxiliary element (5) shaped according to the shape which must be given to the metal sheet, the associated sheet-holding plate (6) having a corresponding shape.

3. Method for butt-welding of planar metal sheets of different thickness, by means of a laser beam, in which there is provided a head for focusing a laser beam, and in which two metal sheets of different thickness which are to be welded to each other are positioned for butt-welding, with their surfaces (3a) facing towards the laser focusing head (1) lying in the same plane and the opposite surfaces forming a step (13), in which the laser focusing head (1) is moved relative to the two metal sheets (3, 4) to be welded, so as to move the laser beam along the contact line (7) between the metal sheets (3, 4) so as to weld the latter to each other, in which during the welding operation the metal sheets (3, 4) are held on a supporting structure (2) by means of two sheet-holding plates (6), and in which said supporting structure (2) and at least one of said sheet-holding plates (6) are so shaped as to plastically deform the metal sheet (4) interposed therebetween when said sheet-holding plate (6) is urged against said metal sheet (4) before the welding operation is carried out,
characterized in that said metal sheet is deformed so as to move a portion thereof to be coplanar with the other metal sheet on the side opposite to that facing towards the laser focusing head, so as to nullify said step (13) while forming a new step on the side facing towards the focusing head (1), at said portion of the metal sheet.

## Patentansprüche

1. Vorrichtung zum Stumpfschweißen von planen Blechen (3,4) unterschiedlicher Dicke mittels eines Laserstrahls, die umfaßt;
- einen Kopf (1) zum Fokussieren eines Laserstrahls,
- eine Struktur (2), die die zu verschweißenden Bleche (3,4) trägt, auf der Bleche unterschiedlicher Dicke (3,4) zum Stumpfschweißen so positioniert werden, daß ihre dem Laser-Fokussierkopf (1) zugewandten Flächen (3a,4a) in der gleichen Ebene liegen und ihre entgegengesetzten Flächen einen Absatz bilden,
- zwei Blechhalteplatten (6), die die zu verschweißenden Bleche (3,4) an die Tragestruktur (2) drücken,
- eine Einrichtung, mit der der Laser-Fokussierkopf (1) in bezug auf die Struktur (2), die die zu verschweißenden Bleche (3,4) trägt, so bewegt wird, daß der Laserstrahl an der Kontaktlinie (7) der Bleche entlangbewegt wird, um letztere miteinander zu verschweißen,
- wobei die Tragestruktur (2) und wenigstens eine der Blechhalteplatten (6) so geformt sind, daß das dazwischen befindliche Blech (4) plastisch verformt wird, wenn die Blechhalteplatte (6) an das Blech (4) gedrückt wird, bevor der Schweißvorgang ausgeführt wird,
**dadurch gekennzeichnet**, daß die Tragestruktur (2) und die Blechhalteplatte (6) so geformt sind, daß sie einen Abschnitt dieses Bleches so bewegen, daß er mit dem anderen Blech an der Seite koplanar ist, die der dem Laser-Fokussierkopf (1) zugewandten gegenüberliegt, so daß der Absatz (13) an diesem Abschnitt aufgehoben wird wobei ein Absatz an der gegenüberliegenden Seite der Bleche hergestellt wird.

2. Vorrichtung nach Anspruch 1, **dadurch gekennzeichnet**, daß die Tragestruktur (2) an ihrem Abschnitt, der der Aufnahme des zu verformenden Bleches (4) dient, mit einem Hilfselement (5) versehen ist, das entsprechend der Form geformt ist, die dem Blech verliehen werden muß, wobei die dazugehörige Blechhalteplatte (6) eine entsprechende Form hat.

3. Verfahren zum Stumpfschweißen von planen Blechen unterschiedlicher Dicke mittels eines Laserstrahls, bei dem ein Kopf zum Fokussieren eines Laserstrahls vorhanden ist, und bei dem zwei Bleche unterschiedlicher Dicke, die miteinander verschweißt werden sollen, zum Stumpfschweißen in Position gebracht werden, wobei ihre dem Laser-Fokussierkopf (1) zugewandten Flächen (3a) in der gleichen Ebene liegen und die gegenüberliegenden Flächen einen Absatz (13) bilden, bei dem der Laser-Fokussierkopf (1) in bezug auf die beiden zu verschweißenden Bleche (3,4) so bewegt wird, daß der Laserstrahl entlang der Linie (7) des Kontaktes zwischen den Blechen (3,4) so bewegt wird, daß letztere miteinander verschweißt werden, bei dem beim Schwelßvorgang die Bleche (3,4) von einer Tragestruktur (2) mittels zweier Blechhatteplatten (6) getragen werden, und bei dem die Tragestruktur (2) und wenigstens eine der Blechhalteplatten (6) so geformt sind, daß sie das dazwischen befindliche Blech (4) plastisch verformen, wenn die Blechhalteplatte (6) an das Blech (4) gedrückt wird, bevor der Schweißvorgang ausgeführt wird,
**dadurch gekennzeichnet**, daß das Blech so verformt wird, daß ein Abschnitt desselben so bewegt wird, daß er mit dem anderen Blech an dar Seite koplanar ist, die der dem Laser-Fokussierkopf Zugewandten gegenüberliegt, so daß der Absatz (13) an diesem Abschnitt des Bleches aufgehoben wird, wobei ein neuer Absatz an der dem Fokusslerkopt (1) zugewandten Seite hergestellt wird.

## Revendications

1. Appareil de soudage bout à bout de feuilles métalliques planes (3, 4) ayant des épaisseurs différentes, à l'aide d'un faisceau laser, comprenant :
- une tête (1) de focalisation d'un faisceau laser,
- une structure (2) de support des feuilles métalliques à souder (3, 4), sur laquelle sont positionnées des feuilles métalliques (3, 4) d'épaisseurs différentes destinées à être soudées bout à bout, leurs surfaces (3a, 4a) tournées vers la tête (1) de focalisation du laser étant dans un même plan et leurs surfaces opposées formant un gradin,
- deux plaques (6) de maintien de feuilles destinées à repousser les feuilles métalliques (3, 4) à souder contre la structure de support (2),
- un dispositif de déplacement de la tête (1) de focalisation de laser par rapport à ladite structure (2) de support des feuilles métalliques (3, 4) à souder, afin que le faisceau laser soit déplacé le long de la ligne (7) de contact des feuilles métalliques et que celles-ci soient soudées l'une à l'autre,
- la structure de support (2) et l'une au moins des plaques (6) de maintien de feuilles ayant une configuration provoquant une déformation plastique de la feuille métallique (4) placée entre elles lorsque la plaque (6) de maintien de feuilles est repoussée contre la feuille métallique (4) avant l'exécution de l'opération de soudage,
caractérisé en ce que la structure de support (2) et la plaque (6) de maintien de feuilles ont une configuration telle qu'une partie de cette feuille métallique est déplacée afin qu'elle soit coplanaire à l'autre feuille métallique du côté opposé à celui qui est tourné vers la tête (1) de focalisation du laser, si bien que le gradin (13) est compensé dans cette partie, avec formation d'un gradin du côté opposé des feuilles métalliques.

2. Appareil selon la revendication 1, caractérisé en ce que ladite structure de support (2) comporte, dans sa partie destinée à loger la feuille métallique (4) qui doit être déformée, un élément auxiliaire (5) ayant une configuration correspondant à celle qui doit être donnée à la feuille métallique, la plaque associée (6) de maintien de feuilles ayant une forme correspondante.

3. Procédé de soudage bout à bout de feuilles métalliques planes d'épaisseurs différentes, à l'aide d'un faisceau laser, dans lequel une tête est destinée à focaliser un faisceau laser et deux feuilles métalliques d'épaisseurs différentes qui doivent être soudées l'une à l'autre sont positionnées afin qu'elles puissent être soudées bout à bout, leurs surfaces (3a) tournées vers la tête (1) de focalisation du laser se trouvant dans le même plan et leurs surfaces opposées formant un gradin (13), dans lequel la tête (1) de focalisation de laser est déplacée par rapport aux deux feuilles métalliques (3, 4) à souder afin que le faisceau laser soit déplacé le long de la ligne (7) de contact entre les feuilles métalliques (3, 4) et que celles-ci soient soudées l'une à l'autre, dans lequel, au cours de l'opération de soudage, les feuilles métalliques (3, 4) sont maintenues sur une structure de support (2) par deux plaques (6) de maintien de feuilles, et dans lequel la structure de support (2) et l'une au moins des plaques (6) de maintien de feuilles ont une configuration telle qu'elles provoquent la déformation plastique de la feuille métallique (4) placée entre elles lorsque la plaque (6) de maintien de feuilles est repoussée contre la feuille métallique (4) avant l'exécution de l'opération de soudage, caractérisé en ce que la feuille métallique est déformée afin qu'une partie de celle-ci soit déplacée et devienne coplanaire à l'autre feuille métallique du côté opposé à celui qui est tourné vers la tête de focalisation du laser, si bien que le gradin (13) est compensé avec formation d'un nouveau gradin du côté tourné vers la tête (1) de focalisation, dans ladite partie de la feuille métallique.
